# EUROPÄISCHE PATENTSCHRIFT

(11) **EP 3 373 566 B1**
(45) Veröffentlichungstag und Bekanntmachung des Hinweises auf die Patenterteilung: **06.03.2019**
(21) Anmeldenummer: 17001724.8
(22) Anmeldetag: 19.10.2017
(51) Int. Cl.: H04M 1/04, H04B 1/3888, H04B 1/3827, A45F 5/00

(54) **HALTEVORRICHTUNG, INSBESONDERE FÜR MOBILTELEFONE**
HOLDING DEVICE, IN PARTICULAR FOR MOBILE TELEPHONES
DISPOSITIF DE MAINTIEN, EN PARTICULIER POUR TÉLÉPHONE MOBILE

(30) Priorität: 08.03.2017 DE 202017001222 U; 31.08.2017 DE 202017004562 U
(43) Veröffentlichungstag der Anmeldung: 12.09.2018
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- US-A1- 2012 042 476

## Beschreibung

Die Erfindung betrifft eine Haltevorrichtung, insbesondere für Mobiltelefone.

Mobiltelefone in der Ausführung als sogenannte Smartphones sind in den letzten Jahren im Interesse einer Vergrößerung des Bildschirms stetig gewachsen, was ihre flächenmäßige Ausdehnung angeht, so dass sie, obwohl sie eine geringe Dicke haben, aufgrund ihrer großen Breite zunehmend unbequemer zu halten sind, wenn sie mit den Fingern an den Rändern ergriffen werden müssen. Dies wird von den Benutzern besonders empfunden, wenn das Smartphone zum Gebrauch längere Zeit gehalten werden muß. Erst recht gilt das für kleine Tablets, die Smartphone- und Tablet-Funktionen kombinieren.

Daher ist eine Haltevorrichtung wünschenswert, die an einem Smartphone oder Tablet angebracht werden kann, um das Halten des Geräts über längere Zeit in bequemerer Weise zu ermöglichen und dadurch auf die Sicherheit gegen versehentliches Fallenlassen des Geräts zu verbessern. Dabei soll natürlich die Haltevorrichtung selbst nicht das Gerät anderweitig unhandlich machen.

Aus der US 8 560 031 B2 ist eine beispielsweise durch Kleben an der Rückseite eines MP3-Players befestigbare Haltevorrichtung bekannt, die aus einem zwischen einer flach zusammengedrückten Position und einer ausgefahrenen Position veränderbaren knopfartigen Haltegriff besteht, der aus einem am MP3-Player befestigbaren Sockelteil, einem Deckel und einem dazwischen angeordneten Faltenbalg gebildet ist. Der Deckel kann in einer flach zusammengedrückten Position des Haltegriffs am Sockel verrastet sein und durch Betätigung in eine durch den federnden Faltenbalg ausgefahrene Position gebracht werden. Der Faltenbalg ist dabei zum Sockel hin konisch verjüngt, um ihn flach zusammendrücken zu können. Unbefriedigend erscheint hier allerdings, dass der Faltenbalg sich zum Sockel hin notwendigerweise konisch verjüngen muß, um flach zusammenlegbar zu sein, und die Verbindung zum Sockel wegen des verringerten Durchmessers geschwächt ist, dass weiter der Faltenbalg nur eine recht begrenzte Ausdehnung ermöglicht und die Haltevorrichtung von Personen mit weniger zierlichen Fingern ungünstig greifbar ist, und die Gefahr von Ermüdungsbrüchen des Faltenbalgs.

Aus der US 2012/0 042 476 A1 ist in der dortigen Figur 18 eine Haltevorrichtung nach dem Oberbegriff des Anspruchs 1 offenbart, wobei zwischen einem durch die Geräterückwand selbst gebildeten geräteseitigen Endteil und einem äußeren, als Griffstück ausgebildeten Endteil ein auseinanderziehbares und zusammendrückbares Verbindungsteil angeordnet ist, das eine Feder aufweisen kann.

Aufgabe der vorliegenden Erfindung ist es demgegenüber, eine zwischen einer flach zusammengedrückten Ruheposition und einer ausgefahrenen Gebrauchsposition verstellbare Haltevorrichtung im Hinblick auf eine wesentlich einfacher herstellbare, mechanisch sehr stabile und nicht der Gefahr eines baldigen Verschleißes durch Ermüdungsbrüche ausgesetzte Konstruktion zu schaffen.

Diese Aufgabe wird gemäß der Erfindung durch die im unabhängigen Ansprüche 1 angegebene Anordnung gelöst. Vorteilhafte Ausgestaltungen und Weiterbildungen der Erfindung sind Gegenstand der Unteransprüche.

Erfindungsgemäß ist eine an einem Smartphone oder dgl. befestigbare oder mit dessen Gehäuse integrierbare Haltevorrichtung aus einem geräteseitigen, mit dem Gerätegehäuse verbindbaren oder damit integrierten Endteil und einem äußeren, als Griffstück dienenden Endteil und einer dazwischen verlaufenden Spiralfeder gebildet. Das als Griffstück dienende Endteil ist in einer flach zusammengedrückten Ruheposition der Haltevorrichtung mit dem geräteseitigen Endteil beispielsweise durch eine Verrastung oder Drehverriegelung oder magnetisch arretierbar, wobei dann die Spiralfeder mit ineinander liegenden Federwindungen flach zusammengedrückt ist.

Die Verbindung der beiden Endteile über eine Spiralfeder ermöglicht ohne Beeinträchtigung der flachen Zusammenlegbarkeit eine deutlich größere Ausfahrbarkeit des Griffstücks und damit eine wesentlich bessere Greifbarkeit auch von Personen mit dicken Fingern.

Die Erfindung wird nachstehend mehr im einzelnen unter Bezugnahme auf die anliegenden Zeichnungen anhand von Ausführungsbeispielen beschrieben. In den Zeichnungen zeigt:
- Fig. 1: in perspektivischer Darstellung schräg von hinten ein Smartphone mit einer daran angeordneten Haltevorrichtung nach der Erfindung in der Ruheposition,
- Fig. 2: eine Darstellung ähnlich Fig. 1 mit der Haltevorrichtung mit einer Spiralfeder in der Gebrauchsposition,
- Fig. 3: das Smartphone mit der Haltevorrichtung in Ruheposition in Seitenansicht,
- Fig. 4: das Smartphone mit der Haltevorrichtung mit der Spiralfeder in der Gebrauchsposition in Seitenansicht,
- Fig. 5: die Haltevorrichtung mit der Spiralfeder in der Gebrauchsposition in separater Darstellung,
- Fig. 6: die Haltevorrichtung mit einer Spiralfeder und einer magnetischen Verriegelung in der Gebrauchsposition,
- Fig. 7: die Haltevorrichtung mit der Spiralfeder und der magnetischen Verriegelung in der Ruheposition,
- Fig. 8: eine nur schematisch angedeutete Haltevorrichtung mit einem ausklappbarem Deckelelement, und
- Fig. 9: eine Haltevorrichtung mit Spiralfeder und einem Spiegel in auseinandergezogener perspektivischer Darstellung.

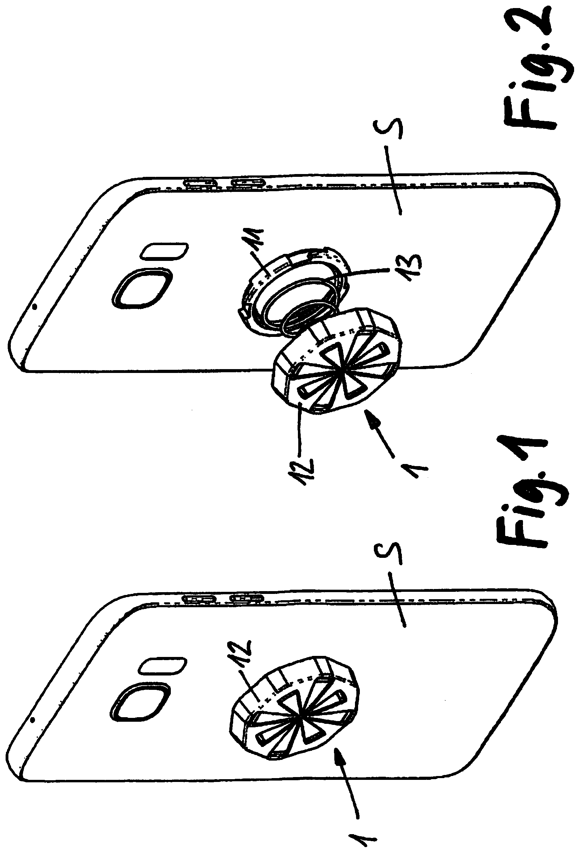

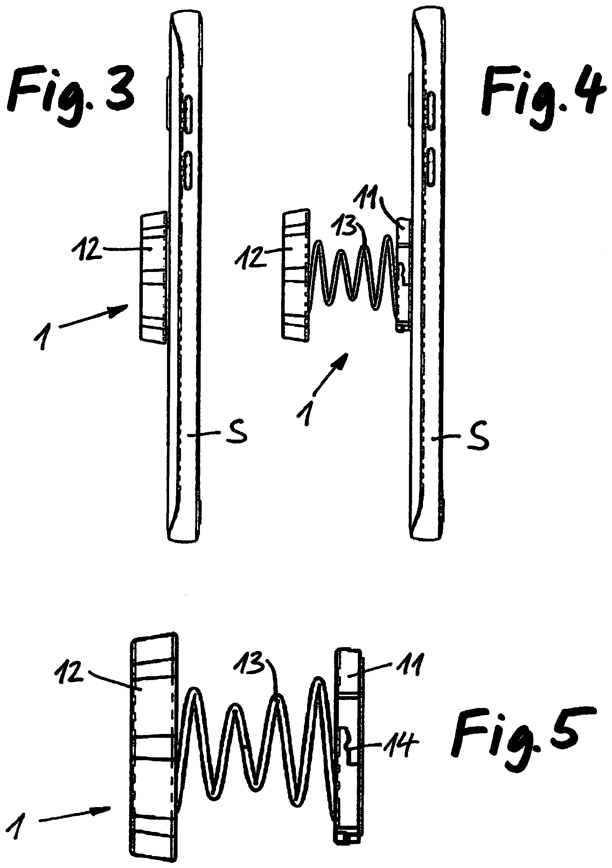

Die Fig. 1 und 2 zeigen jeweils in perspektivischer Ansicht von hinten ein Smartphone S mit einer daran angeordneten Haltevorrichtung 1 nach der Erfindung. Dabei ist die Haltevorrichtung 1 am Smartphone in Fig. 1 in flach zusammengelegter Ruheposition und in Fig. 2 in der ausgefahrenen Gebrauchsposition gezeigt. Die Fig. 3 und 4 zeigen Darstellungen entsprechend den Fig. 1 und 2, jedoch in Seitenansicht. Fig. 5 zeigt die Haltevorrichtung 1 separat.

Die Haltevorrichtung 1 besteht aus einem geräteseitigem Endteil 11, einem äußeren, d.h. vom Gerät im Gebrauchszustand entfernten und als Griffstück dienenden Endteil 12, und einem zwischen den beiden Endteilen 11 und 12 verlaufenden Spiralfederelement 13.

Das geräteseitige Endteil 11 kann beispielsweise durch Kleben an der Rückseite des Gehäuses eines Smartphones oder eines ähnlichen Geräts befestigt sein, oder es kann von vornherein in eine Gehäuserückwand integriert sein, oder auch mit einer flachen Halteschale oder einem X-Halfter zum Halten des Geräts verbunden oder damit einteilig ausgebildet sein.

Das als spiralig gewundene Feder gestaltete Federelement 13 ist vorzugsweise als Druckfeder ausgebildet und mit beiden Endteilen 11 und 12 verbunden und hält das äußere, als Griffstück dienende Endteil 12 in der Gebrauchsstellung (Fig. 2, 4 und 5) im Abstand vom geräteseitigen Endteil 11. In der Ruhestellung (Fig. 1 und 3) ist das Federelement 13 flach zusammengedrückt, und das äußere Endteil 12 ist an dem geräteseitigem Endteil 11 arretiert, so dass die Haltevorrichtung 1 flach zusammengelegt ist und nur noch minimal, nämlich mit der Dicke des äußeren Endteils 12, das in der Ruheposition über das geräteseitige Endteil 11 greift, von der Rückseite des Geräts übersteht.

Die Arretierung des äußeren Endteils 12 am geräteseitigen Endteil 11 kann durch eine Bajonettverriegelung 14 erfolgen, wie beim Ausführungsbeispiel dargestellt, oder durch eine Schraubverbindung, eine Drehklemmverbindung oder irgendeine Art einer Rastverbindung.

Die beim Ausführungsbeispiel gezeigte Bajonettverriegelung ist vorteilhaft, weil sie eine rastende Drehverriegelung darstellt, die durch Drehen leicht entriegelbar ist und gegenüber einer Schraubverbindung den Vorteil hat, dass sie sich nicht unbeabsichtigt aufdreht. Das Lösen der Verriegelung ist bei einer solchen Bajonettverbindung auch einfacher als bei einer anderweitigen Rastverbindung, wo beispielsweise das äußere Endteil 12 vom geräteseitigen Endteil 11 durch Zug Anwendung entriegelt werden müßte. Denkbar ist allerdings auch eine Verrastung mittels federnder fingerbetätigbarer Rastelemente, die am äußeren Endteil 12 diametral gegenüberliegend angeordnet sind und in Gegenelemente am Innenumfang des geräteseitigen Endteils 11 einrasten und zum Lösen durch Fingerdruck entriegelbar sind.

Das Federelement 13 ist, wie dargestellt, in spezieller Weise so ausgebildet, dass die das Federelement 13 bildende Spiralfeder in der Mitte den kleinsten Durchmesser hat und sich sowohl zum geräteseitigen Endteil 11 als auch zum äußeren Endteil 12 hin im Durchmesser erweitert. Dies hat den Vorteil, dass der Anschluß des Federelements 13 an beiden Endteilen 11 und 12 mit größerem Außendurchmesser erfolgt, was eine sehr stabile Verbindung erzeugt, wobei aber trotzdem beim flachen Zusammendrücken in die Ruheposition die Federwindungen ineinander zu liegen kommen und im zusammengelegten Zustand eine sehr geringe Bauhöhe ermöglichen. Nach dem Entriegeln des äußeren Endteils 12 drückt das Federelement 13 das äußere Endteil 12 vom geräteseitigen Endteil 11 weg in die in den Zeichnungen dargestellte Gebrauchsposition.

Die doppeltkonische Ausbildung des Federelements 13 beim dargestellten Ausführungsbeispiel ist auch besonders griffgünstig, indem der Benutzer die mittige, durch den dort kleinsten Durchmesser des Federelements gebildete ringförmige Einschnürung zwischen zwei Fingern aufnehmen kann, was ein ebenso bequemes wie stabiles Halten des Geräts ermöglicht.

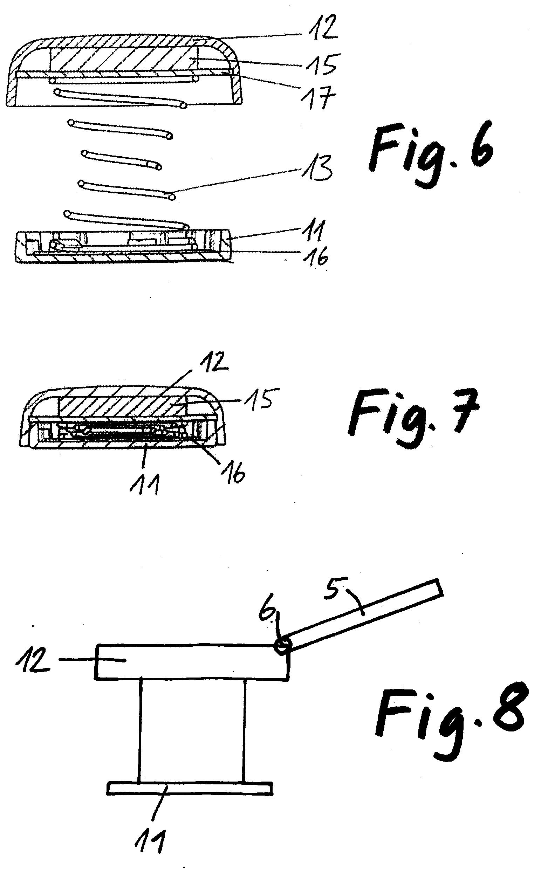

Die Fig. 6 und 7 zeigen eine Abwandlung des vorstehend beschriebenen Ausführungsbeispiels mit einem als Spiralfeder ausgebildetem Federelement 13 als elastisches Zwischenelement zwischen dem geräteseitigen Endteil 11 und dem äußeren Endteil 12, wobei sich diese Ausführungsform von der zuvor beschriebenen Ausführungsform dadurch unterscheidet, dass statt einer mechanischen Arretierung des äußeren Endteils 12 am geräteseitigen Endteil 11 in der flach zusammengedrückten Ruheposition die Arretierung magnetisch erfolgt. Dazu ist das äußere Endteil 12 an seiner Innen- oder Unterseite mit einem daran befestigten flachen plattenförmigen Magneten 15 versehen. Eine zwischen dem Magneten 15 und dem Federelement 13 angeordnete Halteplatte 17 dient zum Anschluß des Federelements 13 und unterstützt außerdem die Halterung des Magneten 15 am äußeren Endteil 12.

Abweichend davon kann die Halteplatte 17 auch entfallen, wenn der Magnet 15 beispielsweise durch Kleben hinreichend sicher mit dem äußeren Endteil 12 verbunden ist und das Federelement 13 um den Umfang des Magneten 15 herum direkt mit dem äußeren Endteil 12 verbunden ist.

Das geräteseitige Endteil 11 ist mit einer eingebauten Eisenplatte 16 versehen, mit welcher der Magnet 15 in der flach zusammengedrückten Ruheposition zusammenwirkt.

Fig. 7 zeigt die Ausführungsform nach Fig. 6 in der flach zusammengedrückten Ruheposition. Während in der in Fig. 6 gezeigten Gebrauchsposition der Magnet 15 aufgrund seiner großen räumlichen Entfernung von der Eisenplatte 16 keine wirksame Anziehungskraft erzeugt, besteht in der flach zusammengedrückten Ruheposition nach Fig. 7 aufgrund des nunmehr sehr geringen Abstands des Magneten 15 von der Eisenplatte 16 eine hohe wirksame Anziehungskraft zwischen dem Magneten 15 und der Eisenplatte 16, welche wesentlich größer als die diese Anziehungskraft entgegenwirkende Federkraft des zusammengedrückten Federelements 13 ist und damit die Haltevorrichtung in ihrer flach zusammengedrückten Ruheposition hält.

Abweichend von den zuvor beschriebenen Ausführungsformen, wo das Federelement 13 als Druckfeder ausgebildet ist, kann das Federelement 13 auch als Zugfeder ausgebildet sein. Zur Benutzung wird dann das äußere Endteil 12 unter Zuganwendung vom geräteseitigen Endteil 11 weg gezogen und durch die das Gerät haltenden Finger des Benutzers daran gehindert, in der Ruheposition zurück zu kehren. Bei dieser Ausführungsform bleibt zwar das äußere Endteil 12 nicht von selbst in seiner vom geräteseitigen Endteil 11 weg gezogenen Gebrauchsposition, aber für den Benutzer ergibt sich ein stabiles Halten des Geräts, weil das äußere Endteil 12 sich aufgrund des Zugs der Zugfeder an die Fingerrücken des Benutzers anlegt, wenn die mittige Einschnürung des doppelkonischen Federelements 13 beim Halten des Geräts zwischen zwei Fingern des Benutzers liegt.

Ist das Federelement 13, wie eben beschrieben, als Zugfeder ausgebildet, kann das Arretieren des äußeren Endteils in der Ruheposition entweder allein elastisch durch die Zugkraft des Federelements 13 oder zusätzlich durch eine mechanische oder magnetische Arretierung erfolgen, wie vorstehend beschrieben.

Bei der Magnetverriegelung in dem Ausführungsbeispiel nach den Fig. 6 bis 7 ist der Magnet 15 am äußeren Endteil 11 und die Eisenplatte 16 am geräteseitigen Endteil 11 angeordnet. Diese Anordnung ist selbstverständlich vertauschbar, so dass der Magnet am geräteseitigen Endteil 11 und die Eisenplatte 16 am äußeren Endteil 12 angeordnet sein kann.

Das äußere Endteil 12 und das geräteseitige Endteil 11 sind vorzugsweise aus Kunststoff ausgebildet und demzufolge nicht magnetisch. Eine weitere Ausführungsform ist dadurch realisierbar, dass statt der Verwendung einer eingebauten Eisenplatte 16 das betreffende Endteil selbst aus magnetisch leitendem Eisen besteht und damit selbst die Eisenplatte bildet.

Fig. 8 zeigt eine Ergänzung der erfindungsgemäßen Haltevorrichtung, die hier nur ganz schematisch dargestellt ist, durch einen am äußeren Endteil 12 angeordneten und damit über ein Scharniergelenk 6 verbundenen ausklappbaren Deckel 5. Dieser dient dazu, in der Gebrauchsposition der Haltevorrichtung das Halten der Haltevorrichtung mit sie umgreifenden Fingern des Benutzers zu verbessern, indem sich der ausgeklappte Deckel 5 an den Fingerrücken abstützt und dadurch den Haltekomfort verbessert.

Der Deckel 5 kann dazu so ausgestaltet sein, dass er, beispielsweise mit Hilfe einer nicht dargestellten Torsionsfeder, in seine aufgeklappte Position vorgespannt wird, oder das Scharniergelenk 6 kann so ausgebildet sein, dass der Deckel in der ausgeklappten Position einrasten kann. Der Deckel 5 kann mit dem übrigen äußeren Endteil 12 verrastbar sein. Er kann auch so ausgebildet sein, dass er in der Ruheposition in auf den übrigen äußeren Endteil 12 geklappter Stellung zugleich die Verriegelung oder Arretierung am geräteseitigen Endteil 11 bewerkstelligt.

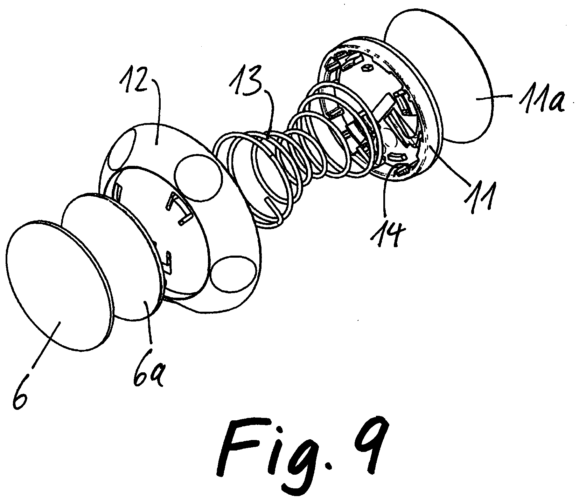

Figur 9 zeigt in auseinandergezogener perspektivischer Darstellung eine Ausführungsform, wie sie auch in den Figuren 1 bis 5 dargestellt ist, mit einer doppelt konischen Spiralfeder als Federelement 13 zur Verbindung des geräteseitigen Endteils 11 mit dem äußeren Endteil 12 und mit einer Bajonettverriegelung 14 zwischen den beiden Endteilen 11 und 12. Eine Klebeschicht 11a dient zur Klebebefestigung des geräteseitigen Endteils 11 an der Rückseite des Smartphonegehäuses.

Bei der in Figur 9 gezeigten Ausführungsform dient das äußere Endteil 12 außerdem als Träger für einen Spiegel 6, der beispielsweise mittels einer Klebeschicht 6a in einer Aussparung in der Oberseite des äußeren Endteils 12 fixierbar ist. Der Spiegel 6 kann als Hilfe zum Ausrichten des Smartphones für Selfies sowie auch für Damen als Schminkspiegel dienen.

Bei der in Figur 8 gezeigten und vorstehend beschriebenen Ausführungsform kann der Deckel 5 ebenfalls als Spiegel ausgebildet sein.

Es versteht sich, dass die vorstehend beschriebenen und in den Zeichnungen dargestellten Ausführungsformen lediglich Ausführungsbeispiele darstellen, deren einzelne Elemente auch in anderer Weise als bei diesen Ausführungsbeispielen miteinander kombinierbar sind.

## Patentansprüche

1. Haltevorrichtung für Smartphones oder ähnliche Geräte, die zwischen einer flach zusammengelegten Ruheposition und einer ausgedehnten Gebrauchsposition verstellbar ist, mit einem geräteseitigen Endteil (11), das mit dem Gerät verbunden oder verbindbar ist, einem äußeren Endteil (12), das als Griffstück ausgebildet ist, und einem die beiden Endteile (11, 12) verbindenden, federnden Bauteil (13), wobei in der Ruheposition das federnde Bauteil (13) flach zusammengelegt und das äußere Endteil (12) am geräteseitigen Endteil (11) arretierbar ist,
**dadurch gekennzeichnet, dass** das federnde Bauteil (13) als doppeltkonische, spiralig gewundene Druckfeder oder Zugfeder ausgebildet ist, die sich von einem mittigen Bereich kleinsten Durchmessers sowohl zum geräteseitigen Endteil (11) als auch zum äußeren Endteil (12) hin im Durchmesser erweitert.

2. Haltevorrichtung nach Anspruch 1, wobei die Arretierung
des äußeren Endteils (12) am geräteseitigen Endteil (11) in der Ruheposition als Drehverriegelung ausgebildet ist.

3. Haltevorrichtung nach Anspruch 2, wobei die Drehverriegelung eine Bajonettverriegelung (14) ist.

4. Haltevorrichtung nach Anspruch 3, wobei die Bajonettverriegelung (14) eine Bajonett-Rastverriegelung ist.

5. Haltevorrichtung nach Anspruch 3, wobei die Drehverriegelung eine Schraubverriegelung oder eine Drehklemmverriegelung ist.

6. Haltevorrichtung nach Anspruch 1, wobei die Arretierung des äußeren Endteils (12) am geräteseitigen Endteil (11) in der Ruheposition durch eine Rastverbindung erfolgt.

7. Haltevorrichtung nach Anspruch 6, wobei die Rastverbindung zwei diametral gegenüberliegend am äußeren Endteil (12) gebildete, radial federnde Rastelemente aufweist, die mit Gegenelementen des geräteseitigen Endteils (11) verrastbar und durch Fingerdruck auf die Rastelemente entriegelbar sind.

8. Haltevorrichtung nach Anspruch 1, wobei die Arretierung des äußeren Endteils (12) am inneren Endteil (11) in der Ruheposition als Magnetverriegelung ausgebildet ist, die aus einem am äußeren Endteil (12) oder am geräteseitigen Endteil (11) angeordneten Magneten (15) und einer am jeweils anderen Endteil angeordneten oder durch dieses selbst gebildeten Eisenplatte (16) besteht.

9. Haltevorrichtung nach Anspruch 8, wobei der Magnet (15) als flache Magnetplatte ausgebildet ist.

10. Haltevorrichtung nach einem der Ansprüche 1 bis 9, wobei das äußere Endteil (12) einen damit über ein Scharniergelenk (6) verbundenen ausklappbaren Deckel (5) aufweist, der sich in der Gebrauchsposition der Haltevorrichtung an den Fingerrücken eines Benutzers abstützen kann.

11. Haltevorrichtung nach einem der Ansprüche 1 bis 10, wobei das äußere Endteil (12) als Träger für einen Spiegel (6) dient.

## Claims

1. A holding fixture for smartphones or similar devices, the holding fixture being adjustable between a flat collapsed resting position and an extended operating position, with a device-side end part (11) connected or connectable to the device, an outer end part (12) configured as a gripping piece, and an elastic construction element (13) connecting both end parts (11, 12), wherein, in the resting position, the elastic construction element (13) is flatly folded and the outer end part (12) is lockable on the device-side end part (11),
**characterised in that** the elastic construction element (13) is configured as a double conical, spirally wound compression spring or tension spring which enlarges from a central area having the smallest diameter towards both the device-side end part (11) and the outer end part (12).

2. The holding fixture according to claim 1, wherein, in the resting position, the locking mechanism of the outer end part (12) on the device-side end part (11) is configured as a rotary lock.

3. The holding fixture according to claim 2, wherein the rotary lock is a bayonet lock (14).

4. The holding fixture according to claim 3, wherein the bayonet lock (14) is a latching bayonet lock.

5. The holding fixture according to claim 3, wherein the rotary lock is a screwed lock or a rotary clamping lock.

6. The holding fixture according to claim 1, wherein, in the resting position, the locking mechanism of the outer end part (12) on the device-side end part (11) is effected by means of a latching connection.

7. The holding fixture according to claim 6, wherein the latching connection has two diametrically opposing, radially elastic latching elements formed on the outer end part (12), the elements being latchable with counter elements of the end part (11) on the device side, and being releasable by pressing on the latching elements with a finger.

8. The holding fixture according to claim 1, wherein the locking of the outer end part (12) on the inner end part (11) in the resting position is configured as a magnetic lock consisting of a magnet (15) arranged on the outer end part (12) or on the device-side end part (11), and an iron plate (16) arranged on or formed by the respective other end part.

9. The holding fixture according to claim 8, wherein the magnet (15) is configured as a flat magnetic plate.

10. The holding fixture according to any one of claims 1 to 9, wherein the outer end part (12) has a flap-out lid (5) connected therewith by means of a hinged joint (6), the lid being able to bear against the backside of the finger of the user in the operating position of the holding fixture.

11. The holding fixture according to any one of claims 1 to 10, wherein the outer end part (12) serves as a carrier for a mirror (6).

## Revendications

1. Dispositif de retenue pour smartphones ou appareils similaires, réglable entre une position de repos repliée à plat et une position d'utilisation étendue, avec une partie d'extrémité (11) côté appareil qui est relié ou peut être relié à l'appareil, une partie d'extrémité extérieure (12) configurée sous forme de pièce de poignée, et un composant élastique (13) reliant les deux parties d'extrémité (11, 12), dans lequel, dans la position de repos, le composant élastique (13) est replié à plat et la partie d'extrémité extérieure (12) peut être verrouillée sur la partie d'extrémité (11) côté appareil,
**caractérisé en ce que** le composant élastique (13) est configuré sous forme d'un ressort de compression ou d'un ressort de traction à double cône enroulé en spirale, dont le diamètre s'élargit d'une zone centrale de plus petit diamètre soit vers l'extrémité (11) côté appareil soit vers l'extrémité extérieure (12).

2. Dispositif de retenue selon la revendication 1, dans lequel le verrouillage de la partie d'extrémité extérieure (12) sur la partie d'extrémité côté appareil (11) dans la position de repos se présente sous la forme d'un verrou rotatif.

3. Dispositif de retenue selon la revendication 2, dans lequel le verrou rotatif est un verrou à baïonnette (14).

4. Dispositif de retenue selon la revendication 3, dans lequel le verrou à baïonnette (14) est un dispositif d'encliquetage à baïonnette.

5. Dispositif de retenue selon la revendication 3, dans lequel le verrou rotatif est un verrouillage à vis ou un verrouillage rotatif à serrage.

6. Dispositif de retenue selon la revendication 1, dans lequel le verrouillage de la partie d'extrémité extérieure (12) sur la partie d'extrémité côté appareil (11) dans la position de repos s'effectue au moyen d'une connexion par encliquetage.

7. Dispositif de retenue selon la revendication 6, dans lequel la connexion par encliquetage présente deux éléments d'encliquetage radialement élastiques qui sont formés diamétralement opposés l'un à l'autre sur la partie d'extrémité extérieure (12) et qui peuvent être verrouillés dans des éléments complémentaires de la partie d'extrémité (11) côté appareil et déverrouillés par pression des doigts sur les éléments d'encliquetage.

8. Dispositif de retenue selon la revendication 1, dans lequel le verrouillage de la partie d'extrémité extérieure (12) sur la partie d'extrémité intérieure (11) dans la position de repos est configuré sous forme de verrou magnétique qui se compose d'un aimant (15) disposé sur la partie d'extrémité extérieure (12) ou sur la partie d'extrémité (11) côté appareil, et d'une plaque de fer (16) disposée respectivement sur l'autre partie d'extrémité respective ou formée par cette dernière elle-même.

9. Dispositif de retenue selon la revendication 8, dans lequel l'aimant (15) est configuré sous forme de plaque magnétique plate.

10. Dispositif de retenue selon l'une quelconque des revendications 1 à 9, dans lequel la partie d'extrémité extérieure (12) présente un couvercle (5) relié de manière pivotant au moyen d'un charnier (6) qui peut s'appuyer sur le dos du doigt de l'utilisateur lorsque le dispositif de retenue est en position d'utilisation.

11. Dispositif de retenue selon l'une quelconque des revendications 1 à 10, dans lequel la partie d'extrémité extérieure (12) sert comme support pour un miroir (6).
